Europäisches Patentamt

European Patent Office

Office européen des brevets

(11) Veröffentlichungsnummer: **0 158 345**
A2

## (12) EUROPÄISCHE PATENTANMELDUNG

(21) Anmeldenummer: 85104375.2

(22) Anmeldetag: 11.04.85

(51) Int. Cl.⁴: **B 23 Q 9/02**
**B 23 Q 1/14**

(30) Priorität: 13.04.84 DE 3413928

(43) Veröffentlichungstag der Anmeldung:
16.10.85 Patentblatt 85/42

(84) Benannte Vertragsstaaten:
CH FR GB IT LI

(71) Anmelder: Black & Decker Overseas AG
Staedtle 36
FL-9490 Vaduz(LI)

(72) Erfinder: Bergler, Otto
Jahnstrasse 18/1
D-7130 Mühlacker-Lomersheim(DE)

(74) Vertreter: Wilhelm, Hans-Herbert, Dr.-Ing. et al,
Wilhelm & Dauster Patentanwälte Hospitalstrasse 8
D-7000 Stuttgart 1(DE)

(54) Führungseinrichtung für ein bewegliches Bearbeitungsgerät.

(57) Eine Führungseinrichtung für eine Handhobelmaschine oder eine Handfräsmaschine weist eine Zirkelspitze auf, die über eine oder mehrere Führungsstangen mit der Bearbeitungsmaschine verbunden ist. Mit dieser Führungseinrichtung sind auch bogen- oder kreisförmige Bearbeitungsvorgänge möglich. Bevorzugt ist die Zirkelspitze in einem Verbindungsstück gelagert, welches über zwei Führungsstangen mit dem Bearbeitungsgerät verbunden ist, wobei diese Führungsstangen das Gehäuse des Bearbeitungsgeräts durchsetzen. Dies ergibt eine sehr stabile Anordnung. Ein zusätzlich auf den Führungsstangen angeordneter Gleitschuh trägt das Gewicht der Bearbeitungsmaschine und sorgt für eine stets gleichbleibende, gleichmäßige Bearbeitungstiefe. Beim Bearbeiten von Kanten können die mit dem Bearbeitungsgerät verbundenen Führungsstangen an einem Winkelstück festgelegt werden, welches über weitere Stangen mit dem die Zirkelspitze tragenden Verbindungsstück verbunden ist.

Fig. 1

0158345

Führungseinrichtung für ein bewegliches Bearbeitungs-
================================================
gerät
=====

Die Erfindung betrifft eine Führungseinrichtung für ein bewegliches
Bearbeitungsgerät, insbesondere eine Handhobelmaschine oder eine
Handfräsmaschine.

Führungseinrichtungen dieser Art sind in vielfältigen Ausführungsformen bekannt. Alle diese Führungseinrichtungen ermöglichen das
geradlinige Führen des Bearbeitungsgeräts in Vorschubrichtung, so
daß beispielsweise die Bearbeitung der Kante eines Werkstücks o.dgl.
möglich ist.

Bisher ist es jedoch nicht möglich, ein Bearbeitungsgerät so zu
führen, daß auch Bearbeitungsvorgänge möglich sind, die eine bogenförmige Bearbeitung des Werkstücks, beispielsweise das Hobeln von
in der Draufsicht kreisförmigen Profilen, ermöglichen. Die Erfindung hat sich die Aufgabe gestellt, eine Führungseinrichtung zu
schaffen, mit der/bogen- bzw. kreisförmige Bearbeitungsvorgänge
möglich sind.

Diese Aufgabe wird erfindungsgemäß bei einer Führungseinrichtung
der eingangs genannten Art dadurch gelöst, daß an dem Bearbeitungsgerät mindestens eine Führungsstange o.dgl. festgelegt ist, welche
direkt oder indirekt mit einer auf eine Auflage, insbesondere das
zu bearbeitende Werkstück, aufsetzbaren Zirkelspitze verbunden ist.

Beim Einsatz dieser neuen Führungseinrichtung wird die Zirkelspitze
auf eine Auflage aufgesetzt. In der Regel wird diese Auflage das zu
bearbeitende Werkstück sein. Das Bearbeitungsgerät ist mit der
Zirkelspitze über die Führungsstange verbunden und kann nun geschwenkt
werden, wobei das Bearbeitungsgerät einen Kreis oder einen Teil eines
Kreises beschreibt, dessen Mittelpunkt die Zirkelspitze ist. Hierdurch wird es beispielsweise möglich, in der Draufsicht kreisförmige
oder kreisabschnittförmige Profile zu hobeln oder zu fräsen, beispielsweise Ornamente, Kanten von Holztellern, Türen mit einer kreisabschnittförmigen Oberkante und dgl.

In vorteilhafter Ausgestaltung ist das Gehäuse des Bearbeitungsgeräts mit einer vorzugsweise durchgehenden, quer zur Vorschubrichtung angeordneten Öffnung versehen, in die die Führungsstange eingesteckt und festgelegt werden kann. Diese Ausführungsform ergibt eine besonders stabile Befestigung der Führungsstange im Bearbeitungsgerät, insbesondere dann, wenn die Öffnung durchgehend ausgebildet ist und die Führungsstange somit über die gesamte Gehäusetiefe des Bearbeitungsgeräts in dieses gesteckt werden kann. Bevorzugt haben sowohl die Führungsstange als auch die in dem Gehäuse des Bearbeitungsgeräts vorgesehene Öffnung kreisförmigen Querschnitt. Hierbei ist es vorteilhaft, wenn die Führungsstange in der Öffnung des Gehäuses des Bearbeitungsgeräts nicht für den Anwender unlösbar - beispielsweise durch eine Presspassung - festgelegt ist, sondern lösbar. Zweckmäßig ist es insbesondere, einen oder mehrere Gewindebolzen vorzusehen, dessen Achse senkrecht zur Achse der Führungsstange verläuft und der beim Einschrauben die Führungsstange festklemmt. Dieser Gewindebolzen kann beispielsweise mit einem Schraubenkopf versehen sein; bevorzugt ist er allerdings mit einem Handgriff oder dgl. versehen, so daß er auch ohne Anwendung von Werkzeugen gelöst und festgeschraubt werden kann.

Die lösbare Befestigung der Führungsstange in der Öffnung des Gehäuses des Bearbeitungsgeräts hat den Vorzug, daß der Radius des zu fräsenden oder zu hobelnden Kreises oder Kreisabschnittes in einfacher Weise und sehr schnell verstellt werden kann.

Die Stabilität der erfindungsgemäßen Führungseinrichtung wird ganz wesentlich erhöht, wenn an dem Bearbeitungsgerät eine zweite Führungsstange festgelegt ist, welche ebenfalls direkt oder indirekt mit der Zirkelspitze verbunden ist. Diese zweite Führungsstange gewährleistet, daß das Bearbeitungsgerät im Betrieb nicht verkantet werden kann. Sie ermöglicht also eine verwindungsfeste Verbindung des Bearbeitungsgeräts mit der Zirkelspitze. Im Prinzip kann die zweite Führungsstange in ähnlicher Weise wie die erste Führungsstange ausgestaltet sein, beispielsweise kreisförmigen Querschnitt besitzen und durch eine Öffnung des Gehäuses des Bearbeitungsgeräts geführt sein.

Bei der Verwendung zweier Führungsstangen ist es zweckmäßig, ein Verbindungsstück vorzusehen, das die Zirkelspitze trägt und welches mit zwei Bohrungen versehen ist, in die die beiden Führungsstangen gesteckt und festgelegt werden können. Ebenso wie das Bearbeitungsgerät an den Führungsstangen ist somit auch das Verbindungsstück und hierdurch auch die Zirkelspitze sicher und verwindungsfest mit diesen Führungstangen verbunden. Außerdem brauchen die Führungsstangen nicht mit einer speziellen Vorrichtung zur Halterung oder Befestigung der Zirkelspitze versehen zu werden. Die Festlegung der Führungsstangen in den Bohrungen des Verbindungsstücks erfolgt auch hier bevorzugt lösbar, insbesondere über Gewindebolzen. Diese lösbare Befestigung ergibt eine zusätzliche radiale Verstellmöglichkeit. Zweckmäßigerweise sind die Bohrungen an dem Verbindungstück durchgehend ausgebildet, so daß dieses auf den Führungsstangen beliebig verschoben werden kann.

Die Befestigung der Zirkelspitze an dem Verbindungsstück wird in vorteilhafter Weiterbildung dadurch vorgenommen, daß das Verbindungsstück eine senkrecht zu den Bohrungen verlaufende weitere Bohrung aufweist, in die die Zirkelspitze eingeführt und festgelegt werden kann. Auch hier ist eine lösbare Befestigung, insbesondere über Gewindebolzen, sinnvoll, da hierdurch die Höhe der Führungsstangen über der Auflage oder dem Werkstück einstellbar gemacht wird.

Eine vorteilhafte Weiterbildung der Erfindung sieht einen Gleitschuh vor, der mit mindestens einer Bohrung versehen ist, durch die eine mit dem Bearbeitungsgerät verbundene Stange o.dgl. steckbar und - vorzugsweise lösbar, insbesondere über Gewindebolzen - festlegbar ist, wobei der Gleitschuh eine Gleitfläche aufweist, die auf einer Auflage, insbesondere dem zu bearbeitenden Werkstück, aufliegt und die beim Bearbeitungsvorgang auf dieser Auflage gleitet. Dieser Gleitschuh fängt im wesentlichen das Gewicht des Bearbeitungsgeräts ab und ermöglicht somit ein ruhiges und sicheres Arbeiten.

Der wesentlichste Vorteil ist jedoch, daß durch diesen Gleitschuh die Höhenposition des Bearbeitungsgeräts automatisch festgelegt wird, so daß die Hobel- oder Frästiefe nicht manuell kontrolliert werden muß. Bei Verwendung dieses Gleitschuhs lassen
sich somit sehr gleichmäßige Profile herstellen. Zweckmäßig ist
es, als Stangen zur Führung des Gleitschuhs und zur Verbindung
desselben mit dem Bearbeitungsgerät die bereits vorhandene Führungsstange oder Führungsstangen zu verwenden.

Vorteilhaft ist es auch, wenn der Gleitschuh aus zwei Teilen
besteht, von denen das obere mit der Bohrung oder den Bohrungen
versehen ist und von denen das untere die Gleitfläche aufweist
und wenn diese Teile miteinander höhenverstellbar verbunden sind.
In diesem Fall läßt sich der Gleitschuh zum Einstellen der Bearbeitungstiefe verwenden, da er vorzugsweise stufenlos höhenverstellbar ist. Eine zweckmäßige Ausführungsform hierzu sieht vor,
daß an dem unteren Teil mindestens zwei Bolzen befestigt sind,
die in ihrem oberen Bereich durch weitere Bohrungen des oberen
Teils ragen und an ihrem oberen Ende mit Tellern o.dgl. versehen
sind, wobei zwischen diesen Tellern und der Oberfläche des oberen
Teils diese Bolzen umgreifende Druckfedern angeordnet sind, und
daß der obere Teil im Bereich zwischen diesen Bolzen eine Gewindebohrung aufweist, in die ein vorzugsweise mit einem Handgriff versehener Gewindebolzen eingeschraubt ist, dessen unteres Ende auf
dem unteren Teil aufsitzt. Dieser Gewindebolzen bestimmt somit
die Höhenposition des oberen Teils gegenüber dem unteren Teil, wobei durch Einschrauben dieses Gewindebolzens die Höhe vergrößert,
d.h. die Bearbeitungstiefe verkleinert wird und umgekehrt.

Der Gleitschuh wird bevorzugt auf der Führungsstange bzw. den
Führungsstangen im Bereich zwischen dem Bearbeitungsgerät und
der Zirkelspitze angeordnet. Dies ist insbesondere dann zweckmäßig,
wenn der Außenrand eines Werkstücks bearbeitet werden soll, beispielsweise ein Standfuß oder ein Holzteller. Soll dagegen in ein
Werkstück ein Profil eingehobelt oder eingefräst werden, das nicht
am Rand dieses Werkstücks verläuft, so kann es auch zweckmäßig sein,
den Gleitschuh auf der der Zirkelspitze abgewandten Seite des Bearbeitungsgeräts anzuordnen. Dies ist dann möglich, wenn die Öffnungen des Bearbeitungsgeräts durchgehend ausgebildet sind und die Führungsstangen auf der der Zirkelspitze abgewandten Seite aus dem Bearbeitungsgerät herausragen. Der Gleitschuh kann dann auf die der Zirkelspitze abgewandten Enden der Führungsstangen aufgesteckt und festgelegt werden. Dies ergibt eine besonders stabile Halterung des Bearbeitungsgeräts, da dessen Gewicht dann zwischen zwei Auflagerpunkten, nämlich der Zirkelspitze und dem Gleitschuh, an den Führungsstangen angreift. Natürlich ist es auch möglich, zwei Gleitschuhe vorzusehen, von denen einer auf die Führungsstangen im Bereich zwischen Bearbeitungsgerät und Zirkelspitze aufgesteckt und festgelegt und der andere auf die aus dem Bearbeitungsgerät herausragenden, der Zirkelspitze abgewandten Enden der Führungsstangen aufgesteckt und festgelegt ist.

Mitunter stellt sich das Problem, daß ein Werkstück nicht an seiner Oberfläche, sondern an seinen Kanten mit einem in Draufsicht kreisförmigen Profil versehen werden soll. Zur Durchführung derartiger Bearbeitungsvorgänge sieht eine vorteilhafte Weiterbildung der Erfindung ein Winkelstück vor, welches mindestens zwei senkrecht zueinanderstehende Bohrungen aufweist - vorzugsweise in jeder Richtung zwei, insgesamt also vier Bohrungen -, wobei durch die in einer Richtung ausgerichteten ersten Bohrungen die mit dem Bearbeitungsgerät verbundenen Führungsstangen steckbar und - vorzugsweise lösbar - festlegbar sind und durch die senkrecht zu den ersten Bohrungen ausgerichteten zweiten Bohrungen weitere Stangen, die mit der Zirkelspitze verbunden sind. Vorzugsweise sind also vier Stangen vorgesehen, von denen zwei als Führungsstangen am Bearbeitungsgerät und an dem Winkelstück festgelegt sind. Die anderen beiden Stangen dienen zur Verbindung des Winkelstücks mit der Zirkelspitze bzw. mit dem diese Zirkelspitze tragenden Verbindungsstück. Der Gleitschuh wird in diesem Fall bevorzugt an den letztgenannten Stangen befestigt. Zusätzlich ist es möglich, einen weiteren, insbesondere speziell ausgebildeten Gleitschuh zu verwenden, der von unten gegen die Auflage oder das Werkstück drückt. Dies ist dann möglich, wenn die Öffnungen des Bearbeitungsgeräts durchgehend ausgebildet sind und die Führungsstangen durch dieses hindurchragen, so daß auf die unteren Enden dieser Führungsstangen ein Gleitschuh aufgesetzt werden kann, der von unten gegen die Anlagefläche oder das Werkstück drückt und auf dieser gleitet.

Weitere Merkmale und Vorteile ergeben sich aus den Unteransprüchen sowie aus der Beschreibung zur Zeichnung, in der vorteilhafte Ausführungen der Erfindung dargestellt sind. Es zeigen:

Fig. 1 Einen Querschnitt durch eine erfindungsgemäße Führungseinrichtung,

Fig. 2 die Draufsicht auf die Führungseinrichtung der Fig. 1 in Richtung des Pfeiles II,

Fig. 3 einen Querschnitt durch eine zweite Ausführungsform,

Fig. 4 die Draufsicht auf die Ausführungsform der Fig. 3 in Richtung des Pfeiles IV und

Fig. 5 einen Querschnitt entsprechend Fig. 1 mit einer zusätzlichen Feineinstellung für die Zirkelspitze.

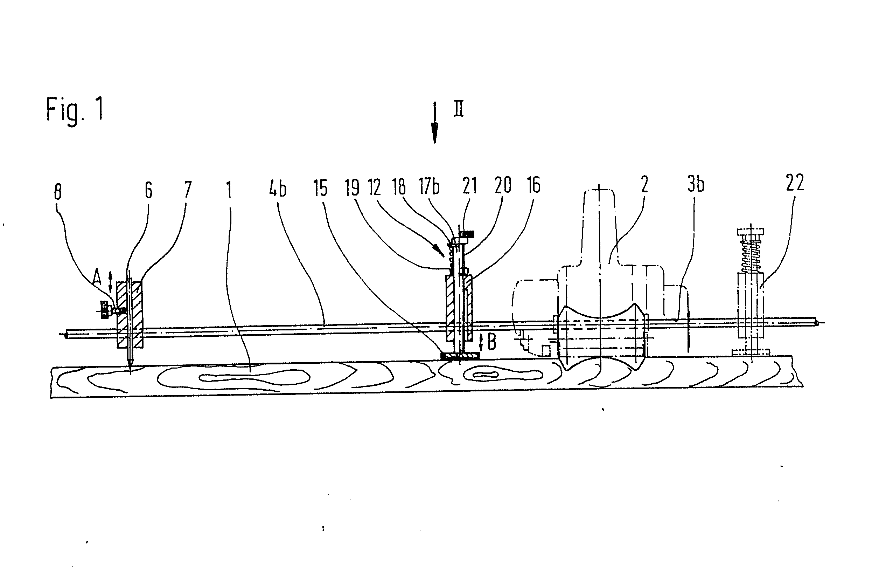

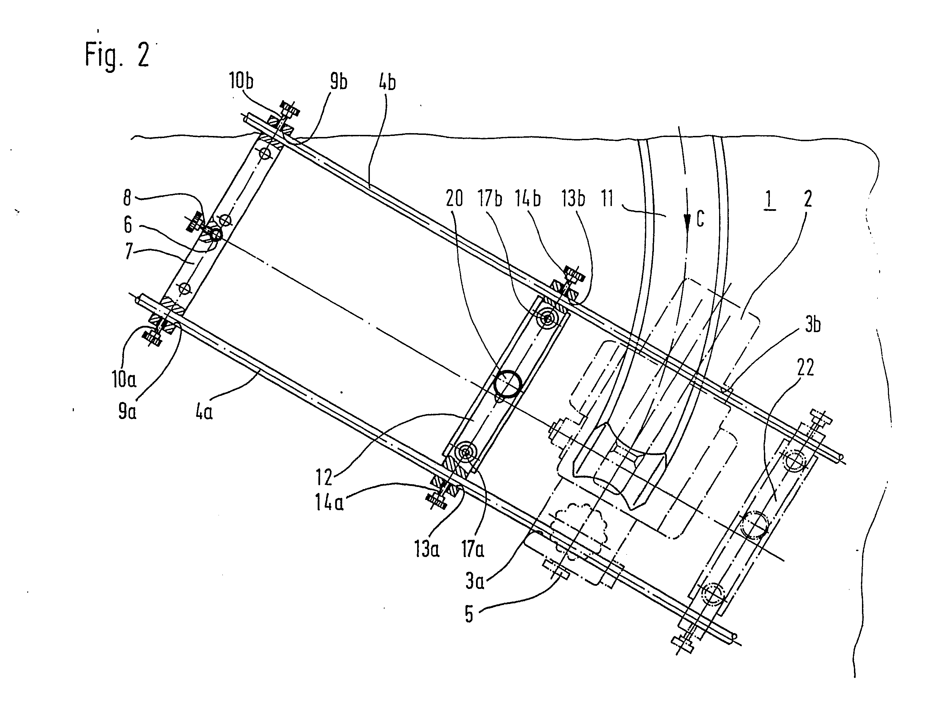

In Fig. 1 ist ein zu bearbeitendes Werkstück mit 1 bezeichnet. Dieses Werkstück soll mit einem kreisförmigen oder kreisabschnittfömigen Profil versehen werden. Zur Bearbeitung ist ein Bearbeitungsgerät, hier eine Handhobelmaschine 2 vorgesehen. Das Gehäuse dieser Handhobelmaschine ist mit zwei durchgehenden Bohrungen 3a und 3b (siehe auch Fig. 2) versehen, durch die jeweils Führungsstangen 4a und 4b gesteckt sind. Die Position der Handhobelmaschine gegenüber den Führungsstangen ist durch mit Handgriffen versehene Gewindebolzen festlegbar, wobei nur einer dieser Gewindebolzen gezeigt und mit 5 bezeichnet ist.

Der Mittelpunkt des zu hobelnden Kreisprofils ist durch eine Zirkelspitze 6 festgelegt. Diese Zirkelspitze ist in einer Bohrung eines Verbindungsstücks 7 festgelegt, und zwar ebenfalls durch einen Gewindebolzen 8. Die Zirkelspitze kann somit gegenüber dem Verbindungsstück 7 in Richtung des Doppelpfeils A stufenlos verstellt werden (Fig. 1).

Das Verbindungsstück 7 weist zwei weitere, horizontal verlaufende Bohrungen 9a und 9b auf, durch die die Führungsstangen 4a und 4b gesteckt sind. Zur Fixierung dieser Führungsstangen gegenüber dem Verbindungsstück 7 sind Gewindebolzen 10a und 10b vorgesehen.

Mit dieser Führungsvorrichtung ist es möglich, in der Draufsicht kreisförmige Profile zu hobeln oder zu fräsen, wie durch das schematisch gezeigte Profil 11 (Fig.2) angedeutet ist. Die zwei die Handhobelmaschine durchsetzenden Führungsstangen garantieren eine sichere und verwindungsfeste Führung. Da die Befestigung der Führungsstangen gegenüber der Handhobelmaschine lösbar ist, ist es auch ohne weiteres möglich, die Handhobelmaschine von diesen Führungs- stangen zu lösen und ohne die Führungseinrichtung einzusetzen. Eine Radialverstellung des Bearbeitungsgeräts wird hierdurch ebenfalls ermöglicht und auch durch die lösbare Befestigung dieser Führungsstangen an dem Verbindungsstück 7. Besonders geeignet ist die Vorrichtung zum Bearbeiten von Holz und ähnlichen Materialien. Die Zirkelspitze 6 kann dann direkt in das Werkstück eingedrückt werden.

Zum Abfangen des Gewichts der Handhobelmaschine und um ein gleichmäßiges Profil zu erzielen, kann ferner ein Gleitschuh 12 vorgesehen werden. Dieser Gleitschuh besitzt zwei Bohrungen 13a und 13b, durch die die Führungsstangen gesteckt sind. Die Fixierung erfolgt mit Gewindebolzen 14a und 14b. Wie insbesondere aus der Fig.1 erkennbar ist, besteht der Gleitschuh aus einem unteren Teil 15, welches eine auf dem Werkstück 1 aufliegende Gleitfläche aufweist, sowie aus einem oberen Teil 16. Durch vertikale Bohrungen des oberen Teils sind an dem unteren Teil befestigte Bolzen 17a und 17b (Fig. 2) geführt. Der linke Teilschnitt durch den Gleitschuh in Fig. 1 zeigt ebenfalls diesen Bolzen. Dort ist auch erkennbar, daß an dem oberen Ende dieses Bolzens ein Teller 18 befestigt ist und daß zwischen diesem Teller und der Oberfläche des Teils 16 eine Druckfeder 19 angeordnet ist. Diese Druckfeder presst das obere Teil 16 in Richtung auf das untere Teil 15.

In eine Gewindebohrung des oberen Teils 16 ist ein Gewindebolzen 20 eingeschraubt. Dieser Gewindebolzen ist in der Fig. 2 erkennbar und auch in dem rechten Teilschnitt durch den Gleitschuh in der Darstellung der Fig. 1. Der Gewindebolzen 20 sitzt auf dem unteren Teil 15 auf und kann durch einen Handgriff 21 o.dgl. verstellt werden. Dieser Gewindebolzen definiert damit den Abstand der beiden Teile des Gleitschuhs. Beim Einschrauben des Gewindebolzens bewegt sich das obere Teil 16 nach oben, so daß die Bear-

beitungstiefe verringert wird. Umgekehrt verhält es sich beim Ausschrauben dieses Gewindebolzens. Die Druckfedern 19 sorgen hierbei dafür, daß das untere Ende des Gewindebolzens 20 stets in Kontakt mit dem unteren Teil 15 steht.

Durch diese Ausbildung des Gleitschuhs 12 wird also eine Höhenverstellmöglichkeit für das Bearbeitungsgerät in Richtung des Doppelpfeils B geschaffen. Damit läßt sich die Bearbeitungstiefe stufenlos einstellen.

Wenn die Führungsstangen 4a und 4b durch das Gehäuse der Handhobelmaschine 2 hindurchragen und außerdem die Profilierung nicht am Rand des Werkstücks, sondern in dessen mittlerem Bereich erfolgen soll, ist es natürlich auch möglich, den Gleitschuh auf den aus dem Gehäuse der Handhobelmaschine herausragenden Enden der Führungsstangen 4a und 4b anzuordnen. Diese Stellung des Gleitschuhs ist gestrichelt gezeichnet und mit 22 bezeichnet. Der Gleitschuh 22 ist in derselben Weise ausgebildet wie der Gleitschuh 12. Die Anordnung des Gleitschuhs radial außerhalb der Handhobelmaschine gewährleistet eine besonders hohe Stabilität der Anordnung, da die Handhobelmaschine in diesem Fall zwischen zwei Auflagerpunkten, nämlich der Zirkelspitze und dem äußeren Gleitschuh, angeordnet ist. Natürlich ist es auch möglich, gleichzeitig zwei Gleitschuhe, wie durch die Bezugsziffern 12 und 22 gezeigt, einzusetzen.

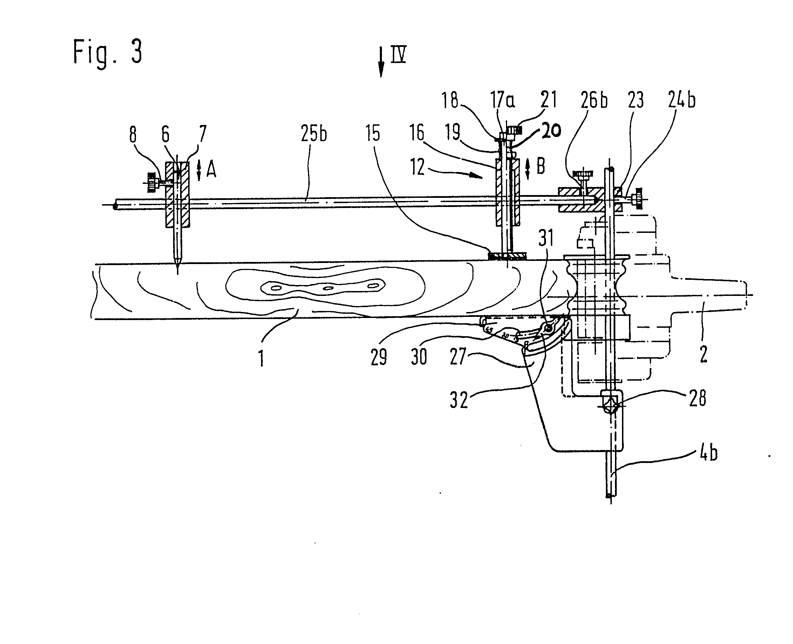

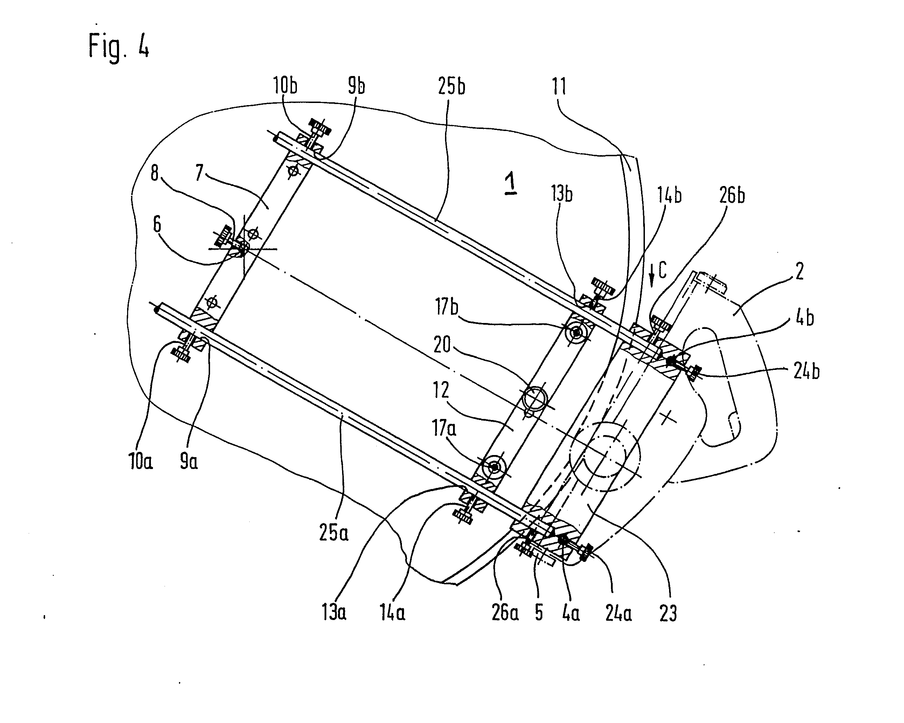

In den Fig. 3 und 4 ist in einer den Fig. 1 und 2 entsprechenden Darstellung eine weitere Anwendungsmöglichkeit der Führungseinrichtung gezeigt. Die Bezugsziffern wurden dabei teilweise beibehalten.

In diesen Figuren ist der Einsatz einer Handhobelmaschine zum Bearbeiten von Kanten eines Werkstücks gezeigt. Hierfür wird ein Winkelstück 23 benötigt, welches zwei vertikale und zwei horizontale Bohrungen aufweist. Durch die vertikalen Bohrungen sind die mit dem Bearbeitungsgerät verbundenen Führungsstangen 4a und 4b gesteckt und mittels Gewindebolzen 24a und 24b gesichert. Die lösbare Befestigung ermöglicht eine Höhenverstellung des Bearbeitungsgeräts. In die waagrechten Bohrungen, die als Sackbohrungen ausgeführt sind, sind weitere Stangen 25a und 25b eingesteckt und durch Gewindebolzen 26a und 26b gesichert. Die Stangen 25a und 25b sind bei dieser Ausführungsform durch die Bohrungen 9a und 9b des Verbindungsstücks 7 geführt und in diesem festgelegt.

Die gezeigte Anordnung ermöglicht auch das Bearbeiten von Kanten kreisförmiger oder kreisabschnittförmiger Körper. Die Höhenverstellung der Handhobelmaschine erfolgt hierbei durch Verschieben des Bearbeitungsgeräts entlang der Führungsstangen 4a und 4b oder durch Verschieben dieser Stangen gegenüber dem Winkelstück 23, während die Radialverstellung durch Verschieben der Stangen 25a und 25b gegenüber dem Verbindungsstück 7 erfolgt.

Auch in dieser Ausführungsform ist zweckmäßig ein höhenverstellbarer Gleitschuh 12 vorgesehen. Außerdem ist es aber auch möglich, noch einen weiteren Gleitschuh 27 vorzusehen, der an den nach unten aus der Handhobelmaschine 2 herausragenden Enden der Führungsstangen 4a und 4b an diesen angeordnet ist - ebenfalls durch Bohrungen -, und der ebenfalls mittels Gewindebolzen an den Führungsstangen gesichert ist, wobei einer dieser Gewindebolzen in der Fig. 3 beispielhaft mit 28 bezeichnet ist. Der weitere Gleitschuh 27 weist ein Anlageteil 29 auf, welches mit einer Gleitfläche an der Unterseite des Werkstücks anliegt und überdies mittels einer Kulissenführung 30, eines Gewindebolzens 31 und einer Flügelmutter 32 gegenüber dem eigentlichen Gleitschuh 27 verstellbar ist.

Der zusätzliche Gleitschuh 27 ermöglicht zusammen mit dem Gleitschuh 12 eine doppelseitige Führung der Handhobelmaschine gegenüber dem Werkstück. Die Handhobelmaschine wird dadurch sehr sicher geführt. Durch das Verschwenken des Anlageteils 29 ist es überdies möglich, dieses auch mit nicht ebenen oder nicht exakt horizontalen Werkstücken in Anlage zu bringen. Dies kann beispielsweise dann der Fall sein, wenn auf der Unterseite des Werkstücks 1 bereits Profilierungen vorhanden sind.

Die Vorschubrichtung der Handhobelmaschine 2 ist im übrigen in den Fig. 2 und 4 mit C bezeichnet.

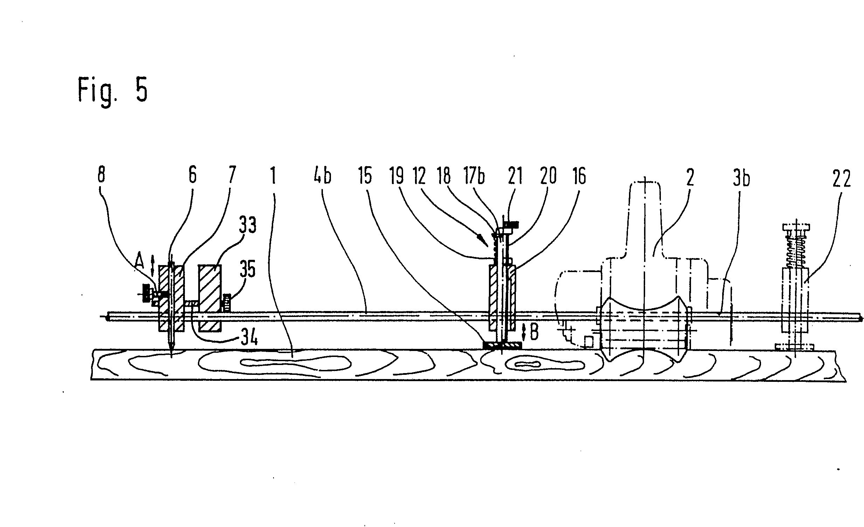

Die Fig. 5 zeigt einen Querschnitt durch eine Ausführungsform
ähnlich der Ausführungsform der Fig. 1, jedoch mit einer zusätzlichen Einrichtung zur Feineinstellung des Bearbeitungsradius. Hierfür ist ein zweites Verbindungsstück 33 vorgesehen,
das in ähnlicher Weise wie das erste Verbindungsstück 7 mit
durchgehenden Bohrungen versehen ist, in die die Führungsstangen
4a und 4b eingesteckt werden können. Im gezeigten Ausführungsbeispiel sind diese Bohrungen durchgehend, jedoch ist dies nicht
zwangsläufig erforderlich; bei Anordnung des zweiten Verbindungsstücks 33 links vom ersten Verbindungsstück 7 (Darstellung gemäß
Fig. 5) würden vielmehr auch Sackbohrungen ausreichen.

Das zweite Verbindungsstück 33 ist auf den Führungsstangen 4a
und 4b mittels hier nicht gezeigter Gewindebolzen festgeklemmt.
Die beiden Verbindungsstücke 33 und 7 sind über eine mit einem
Handgriff versehene Gewindespindel 34 verbunden, wobei diese
Gewindespindel im ersten Verbindungsstück 7 in einer Gewindebohrung geführt ist (die in der Darstellung in der Fig. 5 nicht
erkennbar ist, da sie dort nicht in der Schnittebene liegt).
Im zweiten Verbindungsstück 33 ist die Gewindespindel 34 axial
unverschiebbar drehbar gelagert. Diese Lagerung kann in einfacher Weise dadurch erfolgen, daß die Gewindespindel 34 in ihrem
das zweite Verbindungsstück 33 durchsetzenden Abschnitt nicht
mit einem Gewinde versehen ist und daß die entsprechende Bohrung
des zweiten Verbindungsstücks 33 exakt auf den Durchmesser der
Gewindespindel abgestimmt ist.

Mit dieser Vorrichtung läßt sich in einfacher Weise eine Feineinstellung des Bearbeitungsradius durchführen. Das zweite Verbindungsstück 33 wird mittels seiner Gewindebolzen auf den
Führungsstangen 4a und 4b festgelegt, während die Gewindebolzen
des ersten Verbindungsstücks 7 gelöst werden. Anschließend kann
das Verbindungsstück 7 und damit auch die Zirkelspitze 6 durch
Verstellen des Handgriffs 35 der Gewindespindel 34 in radialer
Richtung verschoben werden. Das Verbindungsstück 7 wird hierbei
durch die Gewindegänge der Gewindespindel 34 geführt. Anschließend kann zur Erhöhung der Stabilität auch das Verbindungsstück
7 durch Anziehen seiner Gewindebolzen auf den Führungsstangen
4a und 4b festgelegt werden; dies ist jedoch nicht unbedingt
notwendig, es ist sogar möglich, die Gewindebolzen des Verbindungsstücks 7 zur Festlegung desselben auf den Führungsstangen vollständig zu entfernen. In diesem Fall können an
an dem Verbindungsstück 7 sogar die Gewindebohrungen für die
Gewindebolzen entfallen.

-1-

A N S P R Ü C H E
================

1. Führungseinrichtung für ein bewegliches Bearbeitungsgerät, insbesondere eine Handhobelmaschine oder eine Handfräsmaschine, dadurch gekennzeichnet, daß an dem Bearbeitungsgerät (2) mindestens eine Führungsstange (4a,4b) o.dgl. festgelegt ist, welche direkt oder indirekt mit einer auf eine Auflage, insbesondere das zu bearbeitende Werkstück (1), aufsetzbaren Zirkelspitze (6) verbunden ist.

2. Führungseinrichtung nach Anspruch 1, dadurch gekennzeichnet, daß das Gehäuse des Bearbeitungsgeräts (2) mit einer vorzugsweise durchgehenden, quer zur Vorschubrichtung angeordneten Öffnung (3a,3b) versehen ist, in die die Führungsstange (4a, 4b) eingesteckt und festgelegt werden kann.

3. Führungseinrichtung nach Anspruch 2, dadurch gekennzeichnet, daß die Führungsstange (4a,4b) in der Öffnung (3a,3b) des Gehäuses des Bearbeitungsgeräts (2) lösbar festgelegt ist, insbesondere durch einen oder mehrere, vorzugsweise mit einem Handgriff versehene Gewindebolzen (5), dessen Achse senkrecht zur Achse der Führungsstange (4a,4b) verläuft und der beim Einschrauben die Führungsstange (4a,4b) festklemmt.

4. Führungseinrichtung nach einem oder mehreren der Ansprüche 1 bis 3, dadurch gekennzeichnet, daß an dem Bearbeitungsgerät (2) eine zweite Führungsstange (4b) festgelegt ist, welche ebenfalls direkt oder indirekt mit der Zirkelspitze (6) verbunden ist.

5. Führungseinrichtung nach Anspruch 4, gekennzeichnet durch ein mit zwei vorzugsweise durchgehenden Bohrungen (9a,9b), in die die beiden Führungsstangen (4a,4b) gesteckt werden können, versehenes Verbindungsstück (7), das die Zirkelspitze (6) trägt.

6. Führungseinrichtung nach Anspruch 5, dadurch gekennzeichnet, daß die Führungstangen (4a,4b) in den Bohrungen (9a,9b) des Verbindungsstücks (7) lösbar festgelegt sind, vorzugsweise über Gewindebolzen (10a,10b).

7. Führungseinrichtung nach Anspruch 5 oder 6, dadurch gekennzeichnet, daß das Verbindungsstück (7) eine senkrecht zu den Bohrungen (9a,9b) verlaufende weitere Bohrung aufweist, in die die Zirkelspitze (6) eingeführt und festgelegt werden kann, und zwar vorzugsweise lösbar, insbesondere über einen Gewindebolzen (8).

8. Führungseinrichtung nach mindestens einem der vorhergehenden Ansprüche, gekennzeichnet durch einen Gleitschuh (12), der mit mindestens einer Bohrung (13a,13b) versehen ist, durch die eine mit dem Bearbeitungsgerät (2) verbundene Stange o.dgl. steckbar und – vorzugsweise lösbar, insbesondere über Gewindebolzen (14a,14b) – festlegbar ist, wobei der Gleitschuh (12) eine Gleitfläche aufweist, die auf einer Auflage, insbesondere dem zu bearbeitenden Werkstück (1), aufliegt und die beim Bearbeitungsvorgang auf dieser Auflage gleitet.

9. Führungseinrichtung nach Anspruch 8, dadurch gekennzeichnet, daß die Bohrung (13a) oder die Bohrungen (13a,13b) des Gleitschuhs (12) so ausgeführt sind, daß der Gleitschuh (12) auf

- 3 -

0158345

die mit dem Bearbeitungsgerät (2) verbundene(n) Führungsstange(n) (4a,4b) steckbar ist.

10. Führungseinrichtung nach Anspruch 8 oder 9, dadurch gekennzeichnet, daß der Gleitschuh (12) aus zwei Teilen besteht, von denen das obere (16) mit der Bohrung versehen ist und das untere (15) die Gleitfläche aufweist und daß diese Teile miteinander höhenverstellbar verbunden sind.

11. Führungseinrichtung nach Anspruch 10, dadurch gekennzeichnet, daß an dem unteren Teil (15) mindestens zwei Bolzen (17a,17b) befestigt sind, die in ihrem oberen Bereich durch weitere Bohrungen des oberen Teils ragen und an ihrem oberen Ende mit Tellern (18) o.dgl. versehen sind, wobei zwischen diesen Tellern (18) und der Oberfläche des oberen Teils (16) diese Bolzen (17a,17b) umgreifende Druckfedern (19) angeordnet sind, und daß das obere Teil (16) im Bereich zwischen diesen Bolzen (17a,17b) eine Gewindebohrung aufweist, in die ein vorzugsweise mit einem Handgriff (21) versehener Gewindebolzen (20) eingeschraubt ist, dessen unteres Ende auf dem unteren Teil (15) aufsitzt.

12. Führungseinrichtung nach einem oder mehreren der Ansprüche 9 bis 11, dadurch gekennzeichnet, daß der Gleitschuh (12) auf der/den Führungsstange(n) (4a,4b) im Bereich zwischen dem Bearbeitungsgerät (2) und der Zirkelspitze (6) angeordnet ist.

13. Führungseinrichtung für ein Bearbeitungsgerät mit einer oder mehreren durchgehenden Öffnungen, durch die eine/mehrere Führungsstange(n) gesteckt ist/sind, wobei die Führungsstange(n) auf der einer Zirkelspitze gegenüberliegenden Seite aus dem Bearbeitungsgerät herausragt/herausragen, nach einem oder mehreren der Ansprüche 8 bis 12, dadurch gekennzeichnet, daß der Gleitschuh (22) auf die der Zirkelspitze (6) abgewandten, aus dem Bearbeitungsgerät (2) herausragenden Enden der Führungsstange(n) (4a,4b) aufgesteckt und dort festgelegt ist.

14. Führungseinrichtung nach Anspruch 13, dadurch gekennzeichnet, daß zwei Gleitschuhe (12,22) vorgesehen sind, von denen einer

-4-

0158345

(12) auf die Führungsstange(n) (4a,4b) im Bereich zwischen Bearbeitungsgerät (2) und Zirkelspitze (6) aufgesteckt und festgelegt und der andere (22) auf die aus dem Bearbeitungsgerät (2) herausragenden, der Zirkelspitze (6) abgewandten Enden der Führungsstange(n) (4a,4b) aufgesteckt und festgelegt ist.

15. Führungseinrichtung nach einem oder mehreren der vorhergehenden Ansprüche, gekennzeichnet durch ein Winkelstück (23), welches mindestens zwei senkrecht zueinander stehende Bohrungen aufweist, wobei durch die in einer Richtung ausgerichtete(n) erste(n) Bohrung(en) die mit dem Bearbeitungsgerät (2) verbundene(n) Führungsstange(n) (4a,4b) steckbar und - vorzugsweise lösbar - festlegbar ist/sind und in die senkrecht zu der/den ersten Bohrung(en) ausgerichtete(n) zweite(n) Bohrung(en), die vorzugsweise als Sackbohrung(en) ausgeführt ist/sind, eine bzw. mehrere weitere Stange(n) (25a,25b), die mit der Zirkelspitze (6) verbunden sind.

16. Führungseinrichtung nach Anspruch 15, bei der das Bearbeitungsgerät eine oder mehrere durchgehende Öffnungen aufweist, durch die eine/mehrere Führungsstange(n) gesteckt ist/sind und beidseitig aus der/den Öffnung(en) herausragt/herausragen, dadurch gekennzeichnet, daß auf das/die dem Winkelstück (23) gegenüberliegende(n) Ende(n) der Führungsstange(n) (4a,4b) ein weiterer, mit entsprechenden Bohrungen versehener Gleitschuh (27) aufgesteckt und festgelegt ist, der eine Gleitfläche aufweist, die vorzugsweise von unten an einer Anlagefläche, insbesondere dem Werkstück 1, anliegt und auf dieser gleitet.

17. Führungseinrichtung nach einem oder mehreren der Ansprüche 5-7, gekennzeichnet durch ein zweites Verbindungsstück (33), welches ebenfalls zwei Bohrungen aufweist, in die die beiden Führungsstangen (4a,4b) gesteckt und außerdem festgelegt werden können, wobei das zweite Verbindungsstück (33) mit dem ersten Verbindungsstück (7) verstellbar verbunden ist.

18. Führungseinrichtung nach Anspruch 17, dadurch gekennzeichnet, daß das zweite Verbindungsstück (33) mit dem ersten Verbindungsstück (7) über eine Gewindespindel (34) verbunden ist.

Fig. 1

Fig. 2

Fig. 3

Fig. 4

4/5

0158345

Fig. 5

0158345